# EUROPÄISCHE PATENTSCHRIFT

(11) **EP 0 613 340 B1**
(45) Veröffentlichungstag und Bekanntmachung des Hinweises auf die Patenterteilung: **09.10.1996**
(21) Anmeldenummer: 92923669.3
(22) Anmeldetag: 20.11.1992
(51) Int. Cl.: A01B 19/04, A01B 73/04

(54) **EGGE, INSBESONDERE SCHMIEGEEGGE**
HARROW, IN PARTICULAR FOLDABLE HARROW
HERSE, NOTAMMENT HERSE PLIABLE

(30) Priorität: 22.11.1991 DE 9114573 U
(43) Veröffentlichungstag der Anmeldung: 07.09.1994
(73) Patentinhaber: SCHWEIGER, Georg, D-85625 Baiern-Feuerreit (DE)
(72) Erfinder: SCHWEIGER, Georg, D-85625 Baiern-Feuerreit (DE)
(74) Vertreter: KUHNEN, WACKER & PARTNER
(86) Internationale Anmeldenummer: DE9200972
(87) Internationale Veröffentlichungsnummer: WO9309658

(56) Entgegenhaltungen:
- DE-A- 2 818 359
- US-A- 2 978 042
- US-A- 3 062 562
- US-A- 4 813 489
- Broschüre der Firma "F. Stille Landmaschinenfabrik" , FRANKFURT 08-05-1966

## Beschreibung

Die Erfindung betrifft eine Egge, und betrifft insbesondere eine Schmiegeegge mit einem auf den Boden auflegbaren Bearbeitungsteil und einem Tragerahmen nach dem Oberbegriff des Anspruchs 1.

Eine derartige Egge ist durch eine Egge der Firma F. Stille Landmaschinenfabrik, die am 08.05.1966 in Frankfurt mittels einer Werbebroschüre der Öffentlichkeit zugänglich gemacht wurde, in der Praxis bekannt geworden. Derartige Eggen werden mit großen Breiten gebaut, um die Flächenleistung der Bodenbearbeitung zu erhöhen. Damit auch bei sehr breiten Eggen mit einer Breite von beispielsweise vier Meter oder noch darüber ein einfacher und bequemer Transport der Egge über öffentliche Straßen gewährleistet ist, kann die Egge für den Transport beidseitig einklappbar gehalten sein. Hierzu sind der vordere Zugbalken und der rückwärtige Schleppbalken der Egge mit Gelenkstellen zur Bildung von Klappachsen versehen, die eine Klappbewegung der äußeren Eggenteile um die im Betrieb der Egge im wesentlichen horizontal und in Schlepprichtung verlaufende Klappachse zulassen, so daß das Bearbeitungsteil für den Transport auf öffentlichen Verkehrswegen einklappbar ist.

In dem auf die volle Arbeitsbreite ausgeklappten Zustand der Egge besteht jedoch insbesondere bei größeren Arbeitsbreiten der Nachteil, daß die Gelenkstellen des Zugbalkens während des Betriebes erheblichen Belastungen ausgesetzt sein können, wenn beispielsweise die über die Breite des die Egge ziehenden Schleppers hinausragenden Teile des Zugbalkens gegen Hindernisse geführt werden. Hierdurch werden Biegemomente in den Zugbalken und damit in die entsprechenden Gelenkstellen eingeleitet, die zu einem Verbiegen derselben führen können.

Der Tragerahmen der in der Praxis bekannt gewordenen Schmiegeegge weist eine vordere Querstrebe auf, die vollständig innerhalb der unteren Anlenkpunkte der Drei-Punkt-Aufhängung des Schleppers liegt, eine hintere Querstrebe, die zugleich als Teil des Schleppbalkens der Egge ausgebildet ist, sowie dazwischen angeordnete Längsstreben, die zum oberen Aufhängepunkt der Drei-Punkt-Aufhängung des Schleppers abgespannt sind und die Außenbegrenzung des Tragerahmens bilden. Die Verwendung eines derartigen Tragerahmens ermöglicht eine ungehinderte Beweglichkeit des Bearbeitungsteils mit dem vorderen Zugbalken bei der Anpassung an Bodenunebenheiten, da der Zugbalken über Ketten am Tragerahmen beweglich angehängt ist. Zu einer Vermeidung von Verbiegungen der Gelenkstellen insbesondere des Zugbalkens vermag der Tragerahmen keinen Beitrag zu leisten.

Demgengenüber liegt der Erfindung die Aufgabe zugrunde, eine Egge, insbesondere eine Schmiegeegge zur Verfügung zu stellen, bei der die mechanischen Belastungen der Gelenkstellen beim Führen der ausladenden Eggenteile gegen Hindernisse herabgesetzt werden können.

Diese Aufgabe wird mit den kennzeichnenden Maßnahmen des Anspruchs 1 gelöst.

Im Rahmen der Erfindung wird zunächst die vordere Querstrebe des Tragerahmens über deren Längsstrebe und die Gelenkstellen des Zugbalkens hinaus nach außen gegebenenfalls bis über die gesamte Breite des Zugbalkens verlängert. Die dadurch für die Zusammenklappbarkeit der Egge notwendig gewordenen Gelenkstellen der vorderen Traverse werden durch die weiteren Maßnahmen der Erfindung vor den im Betrieb möglicherweise auftretenden Biegebelastungen geschützt. Die erfindungsgemäße Verwendung eines Zugorgans zur Aussteifung vermeidet wesentliche Gewichtserhöhung und Zusatzkosten und ermöglicht ein Zusammenklappen ohne Demontage von Teilen.

Mit der Erfindung wird erreicht, daß die an den äußeren Teilen insbesondere der vorderen Traverse während des Betriebes auftretenden Druckbelastungen in Richtung entgegen der Schlepprichtung von einem seitlich außerhalb der Gelenkstelle an der vorderen Traverse angreifenden Längsträger und über ein Zugorgan (beispielsweise eine Kette), welches über einen Befestigungspunkt des Längsträgers an der rückwärtigen Traverse gegen einen innerhalb der Gelenkstelle liegenden Teil der vorderen Traverse gespannt ist, abgeleitet werden, so daß die auf den äußeren Teil der vorderen Traverse angreifenden Kräfte in diesen Längsträger und das Zugorgan eingeführt werden, und somit die Gelenkstellen an der vorderen Traverse von während des Betriebes der Egge einwirkenden Druckkräften und einem damit verbundenen Verbiegen verschont bleiben.

Die Erfindung stellt somit einen gut ausgesteiften äußeren Endbereich der vorderen Traverse zur Verfügung. Dies ermöglicht es, die vordere Traverse als Schutz- oder Stoßstange in dem Sinne zu verwenden, daß sie in Schlepprichtung vor dem vorderen Zugbalken geführt wird und vor diesem auf die Hindernisse auftrifft, so daß der Zugbalken selbst vor entsprechenden Biegemomenten geschützt wird. Darüber hinaus kann aber auch eine Befestigung des über die Gelenkstelle seitlich hinausragenden Teils des Zugbalkens an der Traverse zu dem Zweck erfolgen, den Zugbalken selbst gegen Belastungen zusätzlich auszusteifen, also gegen auftretende Biegemomente widerstandsfähiger zu machen. Hierzu eignet sich insbesondere eine Anhängung des Zugbalkens auch in seinem seitlich außerhalb der Gelenkstelle liegenden Bereich an einem davor angeordneten ausgesteiften Bereich der Traverse durch Zugorgane wie Ketten, welche eine Relativbeweglichkeit des Zugbalkens und damit eine gute Anpassung an Bodenunebenheiten ermöglichen, im Falle von alleine auf den Zugbalken wirkenden Hindernissen aber eine Entlastung der Gelenkstelle des Zugbalkens durch Ableitung der Kräfte in die Traverse ergeben.

Zwar ist es aus der US-PS 4,813,489 an sich bekannt, bei einem landwirtschaftlichen Gerät eine vordere Traverse mit Gelenkstellen dadurch auszusteifen bzw. die Gelenkstellen vor Beigemomenten zu schützen, daß seitlich außerhalb der Gelenkstellen liegende Teile der Traverse durch ein Zugorgan gegen Bewegungen entgegen der Schlepprichtung abgespannt werden. Bei der dortigen Traverse handelt es sich jedoch um einen Träger für Bodenbearbeitungsrollen, dessen gelenkig verbundene Einzelteile durch die Zugorgane überhaupt in Ausrichtung gehalten werden. Die Zugorgane sind zu einer langgestreckten vorderen Deichsel des landwirtschaftlichen Geräts hin abgespannt, um bei Zugbelastung des äußeren Endes der Traverse entgegen der Schlepprichtung einen ausreichend spitzen Winkel mit der Schlepprichtung zu bilden. Dies führt zwangsläufig dazu, daß das breite und damit relativ schwere Bearbeitungsteil in einen erheblichen Abstand hinter seine Befestigung am Schlepper kommt. Ein solcher Abstand führt zu einer hohen Belastung der Hebemechanik des Schleppers durch den langen Hebelarm für das Gewicht des Geräts. Zusätzlich muß der Schlepper schwer bauen, damit er bei angehobenem Gerät ausreichend standfest ist.

Vorteilhafte Ausgestaltungen der Erfindung sind in den Unteransprüchen angegeben.

Bei der Ausführungsform nach Anspruch 2 reicht auch die rückwärtige Traverse nach außen über die Gelenkstelle des Schleppbalkens hinaus, um eine bessere Führungsmöglichkeit des Schleppbalkens, insbesondere an Zugorganen wie Ketten zu erreichen. Die Verlängerung der rückwärtigen Traverse ermöglicht darüber hinaus ein Anbringen der zur Abstützung der Gelenkstellen benötigten Längsträger in Fahrtrichtung, so daß die an der vorderen Traverse angreifenden Kräfte alleine durch entsprechende Druckbelastung der Längsträger abgeleitet werden.

Bei der Weiterbildung nach Anspruch 3 ist die Egge symmetrisch zur Längsmittellinie ausgebildet, so daß die Egge den Schlepper auch in Transportstellung symmetrisch belastet.

Vorteilhafterweise sind die Gelenkstellen der vorderen und der rückwärtigen Traversen zur Bildung einer Klappachse der Egge gemäß der Ausführung nach Anspruch 4 wenigstens annähernd in fluchtender Anordnung zueinander ausgerichtet, um eine Einleitung unbestimmter Kräfte in das Bearbeitungsteil sicher auszuschließen.

Als einfache konstruktive Maßnahme sind die Gelenkstellen gemäß der Weiterbildung nach Anspruch 5 durch scharnierartige Gelenke mit einem zur Klappachse koaxialen Gelenkbolzen ausgebildet, um die äußeren Eggenteile im nicht abgespannten Zustand zu führen und gegen Klappbewegungen in Schlepprichtung zu sichern.

Bei der Ausgestaltung nach Anspruch 6 bzw. 7 ist der vorrichtungstechnische Aufwand aufgrund der Ausbildung der rückwärtigen Traverse zugleich als Schleppbalken der Egge bzw. der vorderen Traverse zugleich als Zugbalken der Egge vereinfacht.

Als besonders einfache mechanische Maßnahme stellt das Zugorgan bei der Egge gemäß Anspruch 8 eine dehnfeste Kette dar, die auf einfache Weise an entsprechenden Befestigungsstellen festgelegt werden kann.

Es hat sich gezeigt, daß die starken Belastungen des Zugorgans im Betrieb überraschend zu merklichen Längungen des Zugorgans führen. Diese Längung des Zugorgans infolge der Beanspruchung kann vorteilhafterweise nach Anspruch 9 durch eine Nachstelleinrichtung kompensiert werden.

Eine vorrichtungstechnische besonders einfache und anwenderfreundliche Nachstellung des Zugorgans kann über eine Anzahl von örtlich unterschiedlich angeordneten Befestigungsstellen nach Anspruch 10 erreicht werden. An diesen Befestigungstellen kann das Zugorgan mit unterschiedlichen Abspannlängen befestigt werden, damit die erforderliche Abspannlänge des Zugorgans einstellbar ist.

In besonders vorteilhafter Weise kann eine Nachstellung der Kette nach Anspruch 11 in m Inkrementen der Abspannlänge mit m Befestigungsstellen bewerkstelligt werden. Diese m Befestigungsstellen sind so angeordnet, daß sie die Abspannlänge um den m-ten Teil der Teilung eines Kettengliedes verändern.

Ferner weist eine weitere Ausgestaltung nicht nur eine Klappachse auf jeder Seite auf, sondern nach Anspruch 12 mindestens zwei. Die Traversen können somit weiter verlängert werden. Dadurch kann eine größere Flächenleistung der Bodenbearbeitung erzielt werden, ohne daß im zusammengeklappten Zustand eine zulässige Gesamthöhe gemäß einer Straßenverkehrsordnung überschritten wird.

Eine weitere Ausführungsform weist nach Anspruch 13 zu jeder Klappachse einen Längsträger mit Zugorgan auf, um in ähnlicher wie oben schon erwähnter Weise abgespannt zu werden. Das Zugorgan wird dann von einem Kreuzungspunkt eines Längsträgers mit der vorderen Traverse zu einem seitlich weiter außen liegenden Kreuzungspunkt eines Längsträgers mit einer rückwärtigen Traverse gespannt, wobei sich die Klappachse zwischen den beiden abgespannten Längsträgern befindet.

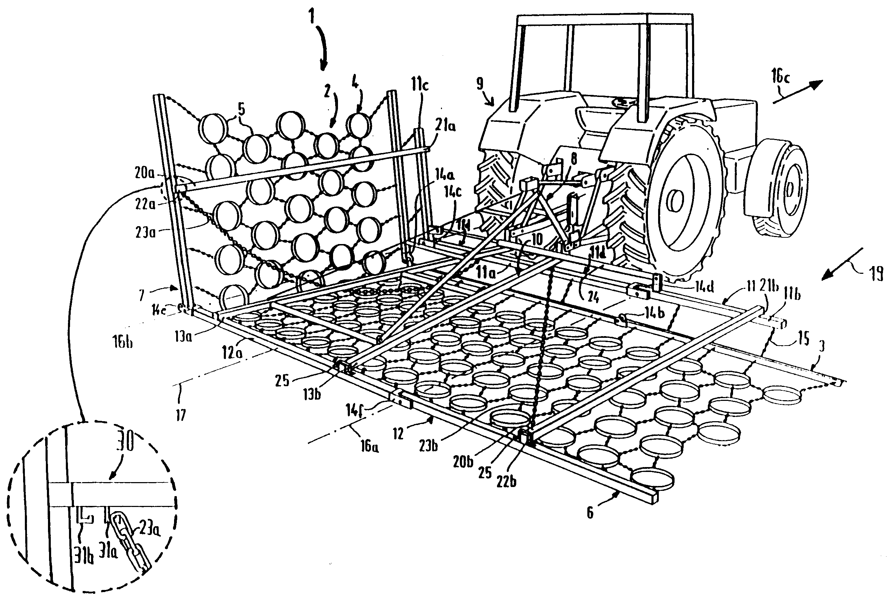

Ein Ausführungsbeispiel der Erfindung wird anhand der Zeichnung erläutert.

Die einzige Zeichnung zeigt eine erfindungsgemäße Egge in perspektivischer Ansicht hinter einem Schlepper. In der Zeichnung ist eine Egge 1, hier in Form einer Schmiegeegge, mit einem auf den Boden auflegbaren Bearbeitungsteil 2 bestehend aus einem Zugbalken 3, Mittelteil 4 mit Bodenzerkleinerungselementen 5 in Form von Zerreibeelementen, Schleppbalken 6, und einem oberhalb des Bearbeitungsteiles 2 angeordneten und an eine Drei-Punkt-Aufhängung 8 eines Schleppers 9 anzuschließenden Tragegestells 7 mit Tragerahmen 10 dargestellt. Der Tragerahmen 10 weist eine vordere Querstrebe 11a und eine rückwärtige Querstrebe 12a auf, die durch dazwischen angeordnete Längsstreben 13a, 13b miteinander verbunden sind.

Die vordere Querstrebe 11a ist über die seitlichen Längsstreben 13a bzw. 13b hinaus unter Bildung einer langgestreckten Traverse 11 verlängert. Analog ist die rückwärtige Querstrebe 12a zur Bildung einer rückwärtigen Traverse 12 verlängert. Im Beispielsfalle bildet die rückwärtige Traverse 12 zugleich den Schleppbalken 6 der Egge 1. Der Schleppbalken 12 und insbesondere die vordere Traverse 11 sind im Sinne mechanischer Festigkeit ausgebildet, insbesondere im Sinne einer hohen Widerstandsfähigkeit gegen Biegemomente.

Das Tragegestell 7 ist durch die vordere Traverse 11, die rückwärtige Traverse 12 und den Längsstreben 13a bzw. 13b, sowie den Tragerahmen 10 gebildet.

Der Zugbalken 3 des Bearbeitungsteils 2 ist mit Gelenkstellen 14a, 14b versehen, die eine Klappbewegung des Bearbeitungsteiles 2 um eine im Betrieb der Egge 1 im wesentlichen horizontal und in Schlepprichtung 16c verlaufende Klappachse 16a bzw. 16b zulassen. Der Zugbalken 3 ist mit mehreren Ketten- oder Seilstücken 15 an der vorderen Traverse 11 angehängt.

Die beiden Traversen 11, 12 reichen nach außen jeweils über die Gelenkstellen 14a, 14b des Zugbalkens 3 hinaus und weisen sowohl bei den Gelenkstellen 14a und 14b des Zugbalkens 3 entsprechend darüber angeordnete Gelenkstellen 14c, 14d als auch Gelenkstellen 14e, 14f auf, die eine Klappbewegung der äußeren Traversenteile 11b, 11c um die im Betrieb der Egge 1 im wesentlichen horizontal und in Schlepprichtung 16c verlaufende Klappachse 16a bzw. 16b in eine aufrechte Stellung des äußeren Traversenteils 11b bzw. 11c zulassen.

Bei dem Ausführungsbeispiel gemäß der Zeichnung ist die Egge 1 zur Längsmittellinie 17 symmetrisch ausgebildet; zur deutlicheren Darstellung befindet sich der rechte Seitenteil der Egge 1 im vollständig ausgeklappten Zustand, während sich der linke Seitenteil der Egge im teilweise hochgeklappten Zustand befindet.

Im Gegensatz zu den bisher bekannten Schmiegeeggen, bei denen der an die Drei-Punkt-Aufhängung des Schleppers anzuschließende Tragerahmen neben den beiden Traversen im wesentlichen lediglich Längsstreben 13a und 13b des Tragerahmens aufweist, ist bei der erfindungsgemäßen Egge 1 mindestens ein Längsträger 20a bzw. 20b vorgesehen, der seitlich außerhalb der Gelenkstelle 14c bzw. 14d an der vorderen Traverse 11 am Befestigungspunkt 21a bzw. 21b angreift. Erfindungsgemäß ist der Befestigungspunkt 22a bzw. 22b des Längsträgers 20a bzw. 20b an der rückwärtigen Traverse 12 mit einem im hochgeklappten Zustand der Seitenteile biegeschlaffen Zugorgan 23a bzw. 23b in Form einer Kette oder eines Seils gegen einen zwischen den Gelenkstellen 14c und 14d liegenden Teil 11a, 11d der vorderen Traverse 11 abgespannt.

Falls nun während des Betriebes der Schmiegeegge etwa in der in der Zeichnung mit einem Pfeil 19 gekennzeichneten Richtung eine Kraft, beispielsweise herrührend von einem Hindernis wie einem Baum oder dergleichen auf die vordere Traverse 11 entgegen der Zugrichtung der Schmiegeegge 1 einwirkt, wird diese Kraft im Beispielsfall in den äußeren Längsträger 20b und das im ausgeklapptem Zustand der Seitenteile gespannende Zugorgan 23b eingeleitet und von dem innenliegenden Teil 11a, 11d der Traverse 11 aufgenommen, so daß im Ergebnis die Gelenkstelle 14d von mechanischen Belastungen auf den Tragerahmen 10 freigehalten wird, weil diese über den Längsträger 22b, das Zugorgan 23b und das innenliegende Teil 11a, 11d in die Drei-Punkt-Aufhängung 8 des Schleppers 9 eingeleitet wird.

Wenn aus Richtung des Pfeiles 19 ein Hindernis wie eine Bodenerhebung alleine auf den Zugbalken 3 wirkt, so sind die Gelenkstellen 14a und 14b des Zugbalkens 3 durch Biegemomente gefährdet. Eine Stabilisierung der äußeren Bereiche des Zugbalkens 3 gegen Bewegungen entgegen der Schlepprichtung 16c erfolgt hier über die Kettenstücke 15, mit denen insbesondere der äußere Teil des Zughalkens 3 am äußeren Traversenteil 11b abgehängt ist. Über das Kettenstück 15 wird die entsprechende Kraft aus Richtung des Pfeiles 19 auf den Zugbalken 3 in die Traverse 11 eingeleitet und in der zuvor bereits erläuterten Weise über den Längsträger 20b, das Zugorgan 23b und den Mittelteil 11a, 11d der Traverse 11 in die Drei-Punkt-Aufhängung 8 des Schleppers 9 eingeleitet, ohne daß die Gelenkstellen 14a und 14b des Zugbalkens 3 durch Biegemomente überlastet werden können.

Die Gelenkstellen 14a, 14b des Zugbalkens 3 sowie 14c, 14d der Traverse 11 und die entsprechenden Gelenkstellen 14e, 14f der rückwärtigen Traverse 12 sind als scharnierartige Gelenke ausgebildet, deren Gelenkbolzen wenigstens annähernd in Richtung der Klappachsen 16a bzw. 16b liegen und wenigstens annähernd miteinander fluchten. Auf diese Weise erfolgt eine von einem Kraftzylinder 24 motorisch angetriebene Klappbewegung der äußeren Seitenteile der Egge, wobei eine Endstellung in der Zeichnung links dargestellt ist, um die Klappachsen 16a bzw. 16b ohne eine Einleitung von unerwünschten Kräften in den Bearbeitungsteil 2 der Egge sowie stabil gegen Kippbewegung in und entgegen der Schlepprichtung 16c.

Die Belastung der Zugorgane 23a und 23b während des Betriebes führen überraschend zu einer bleibenden Längung dieser Zugorgane insbesondere in Form von Ketten. Wenn die Zugorgane 23a und 23b in der ausgeklappten Stellung der Seitenteile der Egge 1, wie dies in der Zeichnung rechts veranschaulicht ist, schlaff bleiben, so erfolgt eine Ableitung der aus Richtung des Pfeiles 19 kommenden Kräfte in die Drei-Punkt-Aufhängung des Schleppers erst nach einer entsprechenden Verformung der Traverse 11 bzw. des Zughalkens 3 mit Einleitung von Biegemomenten in die Scharniere der Gelenkstellen 14a bis 14d. Um dies zu vermeiden, ist eine insgesamt mit 30 bezeichneten Nachstelleinrichtung vorgesehen. Im Beispielsfalle ist die Nachstelleinrichtung 30 als eine Mehrzahl von zwei Befestigungsstellen 31a und 31b für das Ende des als Kette ausgebildeten Zugorganes 23a bzw. 23b ausgebildet. Die als Haken oder Öse ausgebildeten Befestigungsstellen 31a, 31b sind mit einer nicht näher dargestellten Eingriffssicherung versehen, die ein unbeabsichtigtes Lösen der Verbindung mit dem Zugorgan 23a, 23b ausschließt. Die Anordnung ist so getroffen, daß beim Umhängen des letzten Kettengliedes von der Befestigungsstelle 31a auf die benachbarte Befestigungsstelle 31b eine Vergrößerung der Abspannlänge auftritt, welche der Hälfte der Teilung eines Kettengliedes entspricht. Wenn somit das zunächst an der Befestigungsstelle 31a festgelegte Zugorgan 23a bzw. 23b in Form einer Kette auf die Befestigungsstelle 31b umgehängt wird, so ergibt sich eine Straffung entsprechend einer Verkürzung der Länge des Zugorganes 23a bzw. 23b um ein halbes Kettenglied. Wenn nach erneuter Erschlaffung des Zugorganes 23a bzw. 23b eine weitere Nachstellung erforderlich ist, so wird das vorletzte Kettenglied wieder an der Befestigungsstelle 31a eingehängt, so daß sich erneut eine Nachspannung um die halbe Teilung eines Kettengliedes ergibt, und so fort. Auf diese Weise ist eine Nachspannung des Zugorgans 23a bzw. 23b in Form einer Kette in ausreichend kleinen Inkrementen bei minimalem Aufwand gewährleistet.

Bei einer bevorzugten Ausführungsform weisen die Befestigungspunkte zwischen dem Längsträger 20a bzw. 20b und dem Zugorgan 23a bzw. 23b eine Spezialverbindung 25 mit der rückwärtigen Traverse 12 auf, welche eine Seitenverschiehung der Längsträger in Längsrichtung der rückwärtigen Traverse 12 in einem entsprechend ausgebildeten Begrenzungshügel zuläßt, der die obere Haltung für einen Verbindungsstift bildet. Dieser Verbindungsstift verhindert eine Bewegung des Längsträgers in Zugrichtung, erlaubt aber eine Bewegung des Längsträgers quer zur Zugrichtung, so daß kleine Elastizitäten beim Klappvorgang in dieser Bewegungsebene aufgenommen werden können.

Selbstverständlich sind vielfache Abwandlungen und Abänderungen des dargestellten Ausführungsbeispiels möglich, ohne den Rahmen der Erfindung zu verlassen. So kann beispielsweise eine weitere seitliche Vergrößerung der dargestellten Egge 1 dadurch erfolgen, daß die äußeren Traversenteile 11b und 11c sowie entsprechend der Bearbeitungsteil 2 der Egge 1 seitlich weiter verlängert werden, und vorzugsweise beidseitig je eine weitere Gelenkstelle vorgesehen wird, welche eine Klappachse 16 bildet. Diese seitliche äußeren Eggenteile können dann für die Transportstellung gegenüber den benachbarten - in der Zeichnung noch dargestellten - äußeren Eggenteilen ebenfalls um 90° abgewinkelt werden, und mit diesen erneut um 90° geklappt werden, so daß sie horizontal über den starren Mittelteil der Egge 1 zu liegen kommen. Auf diese Weise kann die Arbeitsbreite der Egge 1 weiter verbreitert werden, ohne daß zusätzliche Transportbreite in Kauf genommen werden muß. Die Aussteifung der zusätzlichen seitlichen Eggenteile gegen Belastungen aus Richtung des Pfeiles 19 kann in völlig analoger Weise erfolgen, wie dies bereits erläutert ist, so daß zusätzliche Längsträger 20 und Zugorgane 23 vorgesehen sind. Die zusätzlichen Zugorgane 23 werden jedoch bevorzugt nicht in den Bereich des Mittelteils 11a, 11d der Traverse 11 geführt, sondern in den Bereich der Befestigung des jeweils weiter innen liegenden Längsträgers 20 und der Traverse 11, um keine zu ungünstige Winkelstellung der seitlich äußeren Zugorgane 23 für die Krafteinleitung zu erhalten. Eine Nachstellung der richtigen Spannung der Zugorgane 23 erhält bei einer solchen mehrfachen Hintereinanderschaltung der erfindungsgemäßen Abstützung besonderes Gewicht.

## Patentansprüche

1. Egge, insbesondere Schmiegeegge (1) mit einem auf den Boden auflegbaren Bearbeitungsteil (2) und einem Tragerahmen (7), der oberhalb des Bearbeitungsteils (2) angeordnet und an die Dreipunktaufhängung (8) eines Schleppers (9) anzuschließen ist, wobei das Bearbeitungsteil (2) einen mit mindestens einer eine Schwenkbewegung des Bearbeitungsteiles um eine im Betrieb der Egge im wesentlichen horizontal und in Zugrichtung verlaufende Schwenkachse zulassenden Gelenkstelle versehenen Zugbalken (3), einen Mittelteil (4) mit Bodenzerkleinerungselementen (5), sowie einen Schleppbalken (6) aufweist, wobei der Tragerahmen (7) eine vordere Traverse (11) und eine rückwärtige Traverse (12) aufweist, die durch eine Mehrzahl von dazwischen angeordneten Längsträgern (13a, 13b) miteinander verbunden sind,
dadurch gekennzeichnet, daß
wenigstens die vordere Traverse (11) nach außen über die Gelenkstelle des Zugbalkens (3) hinausreicht und wenigstens je eine der Gelenkstelle des Zugbalkens (3) entsprechend darüber angeordnete Gelenkstelle (14c, 14d) aufweist, die eine Schwenkbewegung der Traversenteile um eine im Betrieb der Egge im wesentlichen horizontal und in Zugrichtung verlaufende Schwenkachse (16) in eine aufrechte Stellung des äußeren Traversenteils zuläßt,
mindestens ein Längsträger (20a, 20b) seitlich außerhalb der Gelenkstelle (14c, 14d) an der vorderen Traverse (11) angreift, und
der Befestigungspunkt (22a, 22b) dieses Längsträgers (20a, 20b) an der rückwärtigen Traverse (12) mit einem Zugorgan (23a, 23b) gegen einen innerhalb der Gelenkstelle liegenden Teil (11a, 11d) der vorderen Traverse (11) abgespannt ist.

2. Egge nach Anspruch 1, dadurch gekennzeichnet, daß die rückwärtige Traverse (12) nach außen über die Gelenkstelle des Schleppbalkens (6) hinausreicht.

3. Egge nach Anspruch 1 oder 2, gekennzeichnet durch ihre zur Längsmittellinie (17) symmetrische Ausbildung.

4. Egge nach einem der vorhergehenden Ansprüche, dadurch gekennzeichnet, daß die Gelenkstellen (14c, 14d bzw. 14e, 14f) der vorderen und der rückwärtigen Traversen (11, 12) zur Bildung einer in Schlepprichtung (16c) liegender Klappachse (16a bzw. 16b) der Egge wenigstens annähernd fluchten.

5. Egge nach einem der vorhergehenden Ansprüche, dadurch gekennzeichnet, daß die Gelenkstellen (14c, 14d bzw. 14e, 14f ) durch scharnierartige Gelenke mit einem zur Klappachse (16a,16b) koaxialen Gelenkbolzen ausgebildet sind.

6. Egge nach einem der vorhergehenden Ansprüche, dadurch gekennzeichnet, daß die rückwärtige Traverse (12) zugleich als Schleppbalken (6) der Egge ausgebildet ist.

7. Egge nach einem der vorhergehenden Ansprüche, dadurch gekennzeichnet, daß die vordere Traverse (11) zugleich als Zugbalken (3) der Egge ausgebildet ist.

8. Egge nach einem der vorhergehenden Ansprüche, dadurch gekennzeichnet, daß das Zugorgan (23a, 23b) als Kette ausgebildet ist.

9. Egge nach einem der vorhergehenden Ansprüche, gekennzeichnet durch eine Nachstelleinrichtung (30) für das Zugorgan (23a, 23b).

10. Egge nach Anspruch 9, dadurch gekennzeichnet, daß die Nachstelleinrichtung (30) eine Anzahl von örtlich unterschiedlich angeordneten Befestigungsstellen (31a, 31b) aufweist, an denen das Zugorgan (23a, 23b) mit unterschiedlichen Abspannlängen befestigbar ist.

11. Egge nach den Ansprüchen 8 und 10, dadurch gekennzeichnet, daß für eine Nachstellung in m Inkrementen der Abspannlänge m Befestigungsstellen (31a, 31b) vorgesehen sind, welche die Abspannlänge jeweils um den m-ten Teil der Teilung eines Kettenglieds verändern.

12. Egge nach einem der vorhergehenden Ansprüche, gekennzeichnet durch eine Mehrzahl von Klappachsen (16a, 16b) auf jeder Seite der Längsmittellinie (17) der Egge.

13. Egge nach Anspruch 12, dadurch gekennzeichnet, daß jeder Klappachse (16a, 16b) ein Längsträger (13a, 13b) mit Zugorgan (23a, 23b) zugeordnet ist.

## Claims

1. A harrow, particularly a folding harrow (1) comprising a work part (2) capable of being placed on the ground and a support frame (7) arranged above said work part (2) and capable of being coupled to the three-point linkage of a tractor (9), said work part (2) comprising a pulling beam (3) provided with a joint portion which permits a folding movement of said work part around a pivotal axis which extends substantially horizontally and in the pull direction of said harrow during operation, a middle part (4) comprising clod breaking elements (5), and a trailing beam (6), said support frame (7) comprising a front traverse (11) and a rear traverse (12) connected to each other by means of a plurality of longitudinal beams (13a, 13b) arranged therebetween,
characterised in that
at least said front traverse (11) projects outwardly beyond said joint portion of said pulling beam (3) and comprises at least one joint portion (14c, 14d) arranged above and corresponding to said joint portion of said pulling beam (3), said joint portion (14c, 14d) permitting a pivoting movement of the sections of said traverse around a pivotal axis (16), which extends substantially horizontally and in the pull direction of said harrow during operation, into an upright position of the outer traverse section,
at least one longitudinal beam (20a, 20b) acts on said front traverse (11) at a location laterally outside of said joint portion (14c, 14d), and
the mounting location (22a, 22b) of said longitudinal beam (20a, 20b) on said rear traverse (12) is rigged against a section (11a, 11d) of said front traverse (11) located inwardly from said joint portion by means of a tension element (23a, 23b).

2. The harrow according to claim 1, characterised in that said rear traverse (12) projects outwardly beyond said joint portion of said trailing beam (6).

3. The harrow according to claim 1 or 2, characterised in that its structure is symmetrical with respect to the longitudinal center line (17) thereof.

4. The harrow according to any one of the preceding claims, characterised in that said joint portions (14c, 14d and 14e, 14f) of said front and rear traverses (11, 12) are at least substantially aligned such as to form a folding axis (16a and 16b) extending in the pull direction (16c) of said harrow.

5. The harrow according to any one of the preceding claims, characterised in that said joint portions (14c, 14d and 14e, 14f) have the form of hinge-type joints, the hinge pins of which are coaxial with a respective folding axis (16a, 16b).

6. The harrow according to any one of the preceding claims, characterised in that said rear traverse (12) also constitutes the trailing beam (6) of said harrow.

7. The harrow according to any one of the preceding claims, characterised in that said front traverse (11) also constitutes the pulling beam (3) of said harrow.

8. The harrow according to any one of the preceding claims, characterised in that said tension element (23a, 23b) has the form of a chain.

9. The harrow according to any one of the preceding claims, characterised by adjusting means (30) for said tension element (23a, 23b).

10. The harrow according to claim 9, characterised in that said adjusting means (30) comprises a number of mounting locations (31a, 31b) in various positions for mounting said tension element (23a, 23b) at various rigging lengths.

11. The harrow according to claims 8 and 10, characterised in that m mounting locations (31a, 31b) each altering the rigging length by 1/m of the chain link pitch are provided for adjusting the rigging length in m increments.

12. The harrow according to any one of the preceding claims, characterised by a plurality of folding axes (16a, 16b) located on either side of said longitudinal central line (17) of said harrow.

13. The harrow according to claim 12, characterised in that each folding axis (16a, 16b) is associated with one respective longitudinal beam (13a, 13b) comprising a tension element (23a, 23b).

## Revendications

1. Herse, notamment herse à billons (1), comportant un élément de traitement (2) pouvant être appliqué sur le sol et un cadre de support (7), qui est disposé au-dessus de l'élément de traitement (2) et doit être raccordé à la suspension en trois points (8) d'un tracteur (9), dans laquelle l'élément de traitement (2) comporte une barre de traction (3) comportant au moins un point d'articulation qui permet un mouvement de basculement de l'élément de traitement autour d'un axe de pivotement, qui est essentiellement horizontal lors du fonctionnement de la herse et s'étend dans la direction de traction, une partie médiane (4) comportant des éléments (5) de fragmentation du sol, ainsi qu'une barre d'attelage (6), le cadre de support (7) possédant une traverse avant (11) et une traverse arrière (12), qui sont reliées entre elles par une multiplicité de supports longitudinaux (13a,13b) disposés entre ces traverses,
caractérisée en ce que
au moins la traverse avant (11) s'étend vers l'extérieur au-delà du point d'articulation de la barre de traction (3) et comporte au moins respectivement un point d'articulation (14c,14d), qui est disposé de façon correspondante au-dessus du point d'articulation de la barre de traction (3) et permet un mouvement de pivotement des éléments de traverse autour d'un axe de pivotement (16), qui est essentiellement horizontal lorsque la herse fonctionne et s'étend dans la direction de traction, pour venir dans une position redressée de l'élément de traverse extérieur,
au moins un support longitudinal (20a,20b) qui est accroché, latéralement à l'extérieur des points d'articulation (14c,14d), à la traverse avant (11), et
le point de fixation (22a,22b) de ce support longitudinal (20a,20b) sur la traverse arrière (12) est haubané au moyen d'un organe de traction (23a,23b), vis-à-vis d'une partie (11a,11b), située en-deçà du point d'articulation, de la traverse avant (11).

2. Herse selon la revendication 1, caractérisée en ce que la traverse arrière (12) s'étend vers l'extérieur au-delà du point d'articulation de la barre d'attelage (6).

3. Herse selon la revendication 1 ou 2, caractérisée par son agencement symétrique par rapport à l'axe médian longitudinal (17).

4. Herse selon l'une des revendications précédentes, caractérisée en ce que les points d'articulation (14c,14d ou 14e,14f) des traverses avant et arrière (11,12) sont au moins approximativement alignés pour former un axe rabattable (16a ou 16b) qui s'étend dans la direction de remorquage (16c).

5. Herse selon l'une des revendications précédentes, caractérisée en ce que les points d'articulation (14c,14d ou 14e,14f) sont formés par des articulations en forme de charnières comportant un axe d'articulation coaxial à l'axe de rabattement (16a,16b).

6. Herse selon l'une des revendications précédentes, caractérisée en ce que la traverse arrière (12) est agencée simultanément en tant que barre d'attelage (6) de la herse.

7. Herse selon l'une des revendications précédentes, caractérisée en ce que la traverse avant (11) est agencée simultanément de manière à former la barre de traction (3) de la herse.

8. Herse selon l'une des revendications précédentes, caractérisée en ce que l'organe de traction (23a, 23b) est agencé sous la forme d'une chaîne.

9. Herse selon l'une des revendications précédentes, caractérisée par un dispositif de réglage complémentaire (30) pour l'organe de traction (23a,23b).

10. Herse selon la revendication 9, caractérisée en ce que le dispositif de réglage complémentaire (30) comporte un certain nombre de points de fixation (31a,31b) disposés en des emplacements différents et auxquels l'organe de traction (23a,23b) peut être fixé avec des longueurs différentes d'haubanage.

11. Herse selon les revendications 8 et 10, caractérisée en ce que pour un réglage complémentaire selon m incréments de la longueur d'haubanage, il est prévu m points de fixation (31a, 31b), qui modifient la longueur d'haubanage respectivement de la m-ème partie du pas d'un maillon de la chaîne.

12. Herse selon l'une des revendications précédentes, caractérisée par une multiplicité d'axes de rabattement (16a,16b) de chaque côté de la ligne médiane longitudinale (17) de la herse.

13. Herse selon la revendication 12, caractérisée en ce qu'un support longitudinal (13a,13b) pourvu d'un organe de traction (23a,23b) est associé à chaque axe de rabattement (16a,16b).
